# EUROPÄISCHE PATENTSCHRIFT

(11) **EP 2 542 786 B1**
(45) Veröffentlichungstag und Bekanntmachung des Hinweises auf die Patenterteilung: **14.06.2017**
(21) Anmeldenummer: 11710678.1
(22) Anmeldetag: 02.03.2011
(51) Int. Cl.: F04D 29/42, F04D 29/44, F04D 29/58, F04D 29/70, B01D 45/14, F24C 15/20

(54) **LUFTABSAUGVORRICHTUNG UND VERFAHREN ZUR ABSCHEIDUNG VON IN EINEM LUFTSTROM BEWEGTEN PARTIKELN**
AIR EXTRACTION DEVICE AND METHOD FOR REMOVING PARTICLES CARRIED BY AN AIR FLOW
DISPOSITIF D'EXTRACTION D'AIR ET PROCÉDÉ DE SÉPARATION DE PARTICULES EN MOUVEMENT DANS UN FLUX D'AIR

(30) Priorität: 03.12.2010 DE 102010053215; 04.03.2010 DE 102010010307
(43) Veröffentlichungstag der Anmeldung: 09.01.2013
(73) Patentinhaber: Inter Ablufttechnik GmbH, 57462 Olpe (DE)
(72) Erfinder: BERLING, Udo, 48496 Hopsten (DE)
(74) Vertreter: Sparing, Rolf Klaus
(86) Internationale Anmeldenummer: PCT/EP2011/001026
(87) Internationale Veröffentlichungsnummer: WO 2011/107267

(56) Entgegenhaltungen:
- EP-A2- 0 340 471
- EP-A2- 1 340 944
- WO-A1-00/06288
- WO-A2-03/072222
- CN-A- 1 776 236
- DE-A1- 1 801 093
- DE-A1-102005 056 921
- DE-A1-102007 051 942
- US-A- 3 217 976
- US-A- 3 865 022
- US-A- 4 323 369

## Beschreibung

Die vorliegende Erfindung bezieht sich auf eine Luftabsaugvorrichtung mit einer Ansaugöffnung, einem sich daran anschließenden Luftführungskanal für einen Luftstrom, der sich in einem ersten Abschnitt durch ein rotierend antreibbares Lüfterrad hindurch in radialer Richtung nach außen und der sich an die Ausströmungsöffnungen des Lüfterrads anschließend in einem zweiten Abschnitt unter Umlenkung des Luftstroms in einer annähernd axialen Richtung zum Lüfterrad erstreckt und in einer Ausblasöffnung mündend ausgestaltet ist, wobei das Lüfterrad so gestaltet ist, dass der zweite Abschnitt eine seitliche Wandung aufweist, die mit einem Abstand zu den Ausströmungsöffnungen des Lüfterrades gegenüberliegend angeordnet ist.

Die Erfindung bezieht sich außerdem auf ein Verfahren zur Abscheidung von in einem Luftstrom bewegten Partikeln, bei dem der Luftstrom in radialer Richtung durch ein Lüfterrad befördert und beschleunigt wird, aus Ausströmungsöffnungen aus dem Lüfterrad austritt und danach in eine axiale Richtung umgelenkt wird.

WO 2009/056207 beschreibt eine Luftabsaugvorrichtung mit einem Lüfterrad unmittelbar nachgeordneten Leitschaufeln, durch die der aus dem Lüfterrad austretende Luftstrom abgebremst wird und dadurch eine Entmischung der im Luftstrom bewegten Partikel erfolgt, indem diese auf die Oberflächen der Leitschaufeln auftreffen und dort anhaften. Diese Vorrichtung führt zu akzeptablen Abscheideergebnissen, allerdings ist eine noch vergleichsweise hohe Gebläseleistung erforderlich, und das Laufgeräusch ist deutlich vernehmbar.

US 3 865 222 A beschreibt eine Luftabsaugvorrichtung, bei der ein aus dem Lüfterrad austretender Luftstrom die Rückwand des Lüfterrades umströmt.

Weitere Luftabsaugvorrichtungen werden beschrieben in EP 0 340 471 A2, US 4 323 369 A oder DE 18 01 093 A1.

Es ist die Aufgabe der Erfindung, eine verbesserte Luftabsaugvorrichtung bzw. ein verbessertes Verfahren zur Abscheidung von in einem Luftstrom bewegten Partikeln anzugeben.

Die Aufgabe wird erfindungsgemäß durch eine Luftabsaugvorrichtung mit den Merkmalen des unabhängigen Anspruchs 1 bzw. ein Verfahren mit den Merkmalen des unabhängigen Anspruchs 14 gelöst.

Durch die erfindungsgemäße Gestaltung wird der aus dem Lüfterrad ausströmende Luftstrom nicht durch Umlenkungen in eine andere als in die axiale Richtung abgebremst, sondern kann ungehindert mit voller Geschwindigkeit in den Durchströmungsraum fließen. Durch die Umlenkung des Luftstroms im Durchströmungsraum aus der radialen in die zumindest annähernd axiale Richtung entlang der seitlichen Wandung, durch die die Umlenkung bewirkt wird, tritt eine Entmischung der im Luftstrom schwebenden Partikel wie Ölen, Fetten, Kondensaten und dergleichen aus der im Luftstrom bewegten Luft auf. Für die Erfindung muss der Luftstrom nicht zwingend in eine genau axiale Richtung umgelenkt werden, es genügt eine Umlenkung in eine annähernd axiale Richtung. Als ein noch annähernd in eine axiale Richtung umgelenkter Luftstrom ist ein Luftstrom anzusehen, der nach der Umlenkung mit seiner Strömungsrichtung um bis zu 20° von der axialen Richtung abweicht.

Hierbei muss der Luftstrom auch nicht in eine einzige Ausblasöffnung geleitet werden, es können auch mehrere Ausblasöffnungen vorhanden sein. Auch wird darauf hingewiesen, dass die Luftabsaugvorrichtung nicht zwangsläufig wie eine Dunstabzugshaube oder eine Ansaugvorrichtung für eine Klimaanlage an einem Ende eines Lüftungskanals angeordnet sein muss, sondern die Luftabsaugvorrichtung kann auch in einen Abschnitt eines Rohrsystems integriert und beispielsweise in einen Rohrabschnitt eingesteckt sein.

Während sich die spezifisch leichtere Luft in einem kleineren Radius auf die neue Bewegungsrichtung ausrichten kann, benötigen die im Luftstrom bewegten Partikel wegen ihres spezifisch höheren Gewichts einen größeren Radius. Je größer die Strömungsgeschwindigkeit des aus dem Lüfterrad austretenden Luftstroms ist, umso größer ist die Differenz im Radius der Luft und der im Luftstrom bewegten Partikel. Durch den größeren Radius und die erhöhte Strömungsgeschwindigkeit kollidieren die meisten der im Luftstrom bewegten Partikel mit der Oberfläche der seitlichen Wandung und haften dort an. Dadurch werden diese Partikel aus dem Luftstrom ausgeschieden. Durch die höhere Strömungsgeschwindigkeit im Bereich des Durchströmungsraumes können noch bessere Abscheideleistungen erzielt werden. Dabei ist der Stromverbrauch beim Betrieb der erfindungsgemäßen Luftabsaugvorrichtung geringer als bei der aus dem Stand der Technik bekannten Vorrichtung, und die Geräuschentwicklung ist niedriger. Ebenfalls wird ein geringerer Volumenstrom an Luft benötigt.

Für die Zwecke der Erfindung genügt es, ein für den Anwendungsfall optimiertes Laufrad zu verwenden, bei dem die Drehzahl und die Form und Abwurfrichtung der Luftschaufeln und die Größe und Form des Durchströmungsraums so aufeinander abgestimmt sind, dass sich ein großer Konstantleistungsbereich der Luftabsaugvorrichtung ergibt. Wenn in dieser Beschreibung von axialer oder radialer Richtung die Rede ist, so beziehen sich diese Angaben immer auf die Drehachse des Lüfterrades.

Nach der Erfindung weisen die Luftschaufeln eine Gestaltung auf, durch die der Luftstrom bei seinem Austritt aus dem Lüfterrad in radialer Richtung aus den Ausströmungsöffnungen austritt und durch den Durchströmungsraum auf die seitliche Wandung gerichtet ist. Wenn der Luftstrom in radialer Richtung aus der jeweiligen Ausströmungsöffnung austritt, kann er auf kürzestem Weg ohne einen wesentlichen Geschwindigkeitsverlust die seitliche Wandung erreichen. Bei einer schrägen Ausströmungsrichtung des Luftstroms verlängern sich die Wege des Luftstroms, und dieser ist beim Erreichen der seitlichen Wandung deutlich langsamer als beim Auftreffen aus einer radialen Ausströmungsrichtung. Bei einer höheren Strömungsgeschwindigkeit funktioniert die Entmischung und Abscheidung der im Luftstrom bewegten Partikel an der Seitenwand besser als bei niedrigeren Strömungsgeschwindigkeiten, so dass sich die höhere Strömungsgeschwindigkeit des Luftstroms in einem besseren Abscheideergebnis bemerkbar macht. Da sich die Abströmungsrichtung des Luftstroms aus den Ausströmungsöffnungen bei einer Veränderung der Drehzahl des Lüfterrades verändert, sollte der Verlauf, die Krümmung und die Gestalt der Luftschaufeln auf zumindest eine Betriebsgeschwindigkeit des Lüfterrades so angepasst sein, dass sich die Ausströmung des Luftstroms aus dem Lüfterrad in radialer Richtung senkrecht auf die Seitenwand zu ergibt. Nach der Erfindung ist die Form der seitlichen Wandung an den Strömungsverlauf des Luftstroms durch den Durchströmungsraum angepasst und weist in Strömungsrichtung des Luftstroms eine Aufweitung auf.

Der Durchströmungsraum kann sich nach einer bevorzugten Ausgestaltung unmittelbar an die Ausströmungsöffnungen anschließen. Durch den unmittelbaren Anschluss gelangt der Luftstrom mit seiner höchsten Strömungsgeschwindigkeit aus den Ausströmungsöffnungen des Lüfterrads direkt in den Durchströmungsraum hinein. Die hohe Strömungsgeschwindigkeit kann dann voll genutzt werden, um durch die Umlenkung und die unterschiedliche spezifische Dichte der im Luftstrom bewegten Gas- und Fettmoleküle und der daraus resultierenden unterschiedlichen Flugbahnen eine Entmischung der verschiedenen Bestandteile der im Luftstrom bewegten Bestandteile zu erzielen. Je schneller sich ein Partikel in einem Luftstrom in eine Richtung bewegt, umso größere Kräfte müssen aufgebracht werden, um die Strömungsrichtung dieses Partikels zu verändern. Es müssen auch umso größere Kräfte aufgebracht werden, die Strömungsrichtung eines Partikels zu verändern, je schwerer dieser Partikel ist. Aus der Kombination der Bewegungsgeschwindigkeit und Schwere der Partikel ergibt sich für jedes Partikel eine individuelle Flugbahn im Umlenkungsbereich, die bei größeren Strömungsgeschwindigkeiten für die jeweiligen Partikel weiter aufgespreizt ist. Durch die größere Aufspreizung kann eine verbesserte Abscheidung erzielt werden. Da sich die Strömungsgeschwindigkeit des Luftstroms und der darin beförderten Partikel bei einem unmittelbaren Anschluss des Durchströmungsraums an die Ausströmungsöffnungen des Lüfterrades nicht oder nur geringfügig verringert hat, ergibt sich beim unmittelbaren Anschluss des Durchströmungsraums an die Ausströmungsöffnungen eine verbesserte Abscheidewirkung.

Nach einer vorteilhaften Ausgestaltung weist die seitliche Wandung eine oder mehrere Öffnungen auf, durch die an der Wandung entlang gleitende und/oder fließende Stoffe auf die Rückseite der Wandung gelangen können. Dadurch werden die an der Wandung entlang gleitenden und/oder fließenden Stoffe vollständig aus dem Durchströmungsraum ausgeschieden und können nicht erneut vom Luftstrom mitgerissen werden oder in die nachgeordneten Luftführungskanäle gelangen, wo diese eine Brandgefahr darstellen, üble Gerüche auslösen oder Ungeziefer anlocken können. Die Öffnungen können quer zur Strömungsrichtung des durch den Durchtrittsraum strömenden Luftstroms angeordnet sein, auf diese Weise treibt der Luftstrom die Stoffe zwangsläufig in den Bereich der Öffnungen. Es kann eine einzelne Öffnung in Strömungsrichtung vorgesehen sein, es ist aber auch möglich, mehrere Öffnungen in Strömungsrichtung hintereinander gestaffelt anzuordnen, um dadurch die Abscheideleistung zu erhöhen, wenn dies je nach Anwendungsfall erforderlich erscheint. Die Öffnung kann als ein schmaler Schlitz ausgestaltet sein, mit dem schon zufrieden stellende Abscheideleistungen erzielbar sind. Die Öffnung kann so gestaltet sein, dass sich eine kapillare Wirkung einstellt, so dass die Stoffe durch die kapillare Wirkung von der Oberfläche der seitlichen Wandung abgesogen werden. Die Öffnungen stellen eine Art Falle dar, durch die die Stoffe aus dem Durchströmungsraum entfernbar sind.

Nach einer weiteren Ausgestaltung ist stromabwärts zu einer Öffnung ein Vorsprung angeordnet, durch den an der Wandung entlang gleitende und/oder fließende Stoffe auffangbar und durch die Öffnung hindurch in den Raum auf der Rückseite der Wandung umleitbar sind. Durch einen Vorsprung kann die Abscheideleistung verbessert werden, wobei sich aus dem Vorsprung auch ein Abschattungseffekt hinsichtlich des vorbeiströmenden Luftstroms ergibt. Wenn der Vorsprung so gestaltet wird, dass der Luftstrom an der Öffnung vorbei gelenkt wird, können die Stoffe leichter in die Öffnung eintreten, ohne dass sie leicht vom Luftstrom mitgerissen werden.

Nach einer günstigen Ausgestaltung ist der Vorsprung auf der in Strömungsrichtung des Luftstroms durch den Durchströmungsraum stromabwärts gelegenen Seite der Öffnung angeordnet und dem Luftstrom entgegen gerichtet. Durch die Anordnung des Vorsprungs auf der stromabwärts gelegenen Seite und die dem Luftstrom entgegen gerichtete Form werden die an der Wandung entlang gleitenden und/oder fließenden Stoffe im Bereich der Öffnung vom vorbeiströmenden Luftstrom abgeschirmt, der Luftstrom wird in diesem Bereich abgelenkt. Dadurch können die Stoffe leicht in die Öffnung eintreten, ohne dabei gleich wieder vom Luftstrom mitgerissen zu werden.

Nach einer bevorzugten Ausgestaltung ist auf der Rückseite der Wandung ein Auffangreservoir zum Ansammeln der durch die Öffnung aus dem zweiten Abschnitt abgeschiedenen gleitenden und/oder fließenden Stoffe angeordnet. Durch die Sammlung der durch die Öffnung abgeschiedenen Stoffe auf der Rückseite der seitlichen Wandung müssen die Stoffe nicht mehr weit befördert werden. Auf der Rückseite der seitlichen Wandung findet sich zudem ein ausreichender Bauraum, in dem die Stoffe gesammelt werden können.

Nach einer zweckmäßigen Ausgestaltung ist die seitliche Wandung ganz oder zumindest bereichsweise mit einer Kühlvorrichtung kühlbar und/oder mit einer Heizvorrichtung heizbar. Durch eine Kühlung der seitlichen Wandung können daran abgeschiedene Stoffe besser an der Oberfläche der Wandung anhaften, wenn die Viskosität der abgeschiedenen Stoffe temperaturabhängig ist, wie das beispielsweise bei Ölen und Fetten der Fall ist. Je nach Tau- und Verdampfungspunkt und aktueller Temperatur des jeweiligen Stoffes können im Luftstrom bewegte Partikel durch den Kühlungseffekt der seitlichen Wandung den Aggregatzustand wechseln und beispielsweise an dieser kondensieren, oder flüssige Stoffe werden aufgrund der Abkühlung zumindest zähfließender. Durch eine spätere Erwärmung der seitlichen Wandung, die passiv durch Abschalten der Kühlung und langsame Erwärmung auf die Umgebungstemperatur oder gezielt und aktiv durch eine Heizung der seitlichen Wandung erfolgen kann, ist es möglich, die gekühlt anhaftenden Stoffe, die dabei ebenfalls erwärmt werden, zu mobilisieren und diese gezielt abzuscheiden. Dies kann beispielsweise erfolgen, indem Fett durch die Erwärmung verflüssigt wird, an der seitlichen Wandung der Schwerkraft folgend abfließt und über eine Abflussleitung einem Sammelbehälter zugeführt wird. Auf diese Weise kann die seitliche Wandung durch kurzes Aufheizen gereinigt werden. Die Heizung der seitlichen Wandung kann auch ohne eine Kühlung realisiert werden.

Nach einer günstigen Ausgestaltung sind im Luftführungskanal stromabwärts zum Durchströmungsraum Gleichrichter-Strömungsflächen angeordnet. Durch die Gleichrichter-Strömungsflächen können die schraubenförmigen Drallströmungen des Luftstroms, der aus dem Lüfterrad austritt, wieder in eine gleichmäßigere Strömung umgewandelt werden. Dadurch können die Rohrleitungsquerschnitte der nachgeordneten Lüfterrohre besser ausgenutzt werden. Da die Gleichrichter-Strömungsflächen dem Durchströmungsraum nachgeordnet sind, wirkt sich der mit der Gleichrichtung einher gehende Geschwindigkeitsverlust nicht nachteilig auf die Abscheideleistung im Durchströmungsraum aus.

Nach einer weiterführenden Ausgestaltung ist der Durchströmungsraum ringförmig um das Lüfterrad umlaufend ausgestaltet. Der Durchströmungsraum muss allerdings nicht zwangsläufig rund und ringförmig gestaltet sein, es können auch Geometrien mit 4, 5, 6 oder mehr Außenecken bzw. gleichförmige oder ungleichförmige Geometrien verwendet werden.

Nach einer besonders bevorzugten Ausgestaltung sind das Lüfterrad und/oder die seitliche Wandung über eine werkzeuglos lösbare Verbindung mit der Luftabsaugvorrichtung verbunden. Da die im Luftstrom bewegten Partikel an der seitlichen Wandung anhaften, aber auch im Lüfterrad, ist es vorteilhaft, wenn zumindest eines oder auch beide Bauteile schnell und leicht aus der Luftabsaugvorrichtung entnommen werden können, um diese zu reinigen. Eine werkzeuglos lösbare Verbindung kann beispielsweise über klemmende oder rastende Verbindungstechniken oder vergleichbare Lösungen hergestellt werden.

Nach einer Ausgestaltung der Erfindung erstreckt sich die seitliche Wandung in axialer Richtung bis in einen Bereich hinter dem Lüfterrad und in diesem Bereich ist mindestens eine Öffnung in der seitlichen Wandung vorhanden. Durch die Umlenkung des aus dem Lüfterrad austretenden Luftstroms strömt dieser nicht in einer axialen Richtung weiter, sondern die Strömungsrichtung erhält einen Versatz in axialer Richtung. Um in diesem Fall die Abscheidewirkung der seitlichen Wandung voll nutzen zu können, ist es sinnvoll, diese bis in einen Bereich hinter dem Lüfterrad zu führen. Soweit dort noch Partikel anhaften, ist es sinnvoll, diese über eine Öffnung abzuscheiden.

Nach einer zweckmäßigen Ausgestaltung ist die Öffnung als umlaufender Spalt, insbesondere als ringförmig umlaufender Spalt ausgestaltet. Ein ringförmig umlaufender Spalt kann beispielsweise auf eine einfache Weise über eine vergrößerte Trennfuge zwischen verschiedenen Bauteilen realisiert werden, beispielsweise eine Trennfuge zwischen der seitlichen Wandung und einem Anschlussbauteil.

Nach einer Ausgestaltung der Erfindung ist die Luftabsaugvorrichtung als Rohrlüftermodul in eine vorhandene Lüftungsvorrichtung einsetzbar. Als Modul kann die Luftabsaugvorrichtung in hohen Stückzahlen mit entsprechenden Kostenvorteilen hergestellt werden. Die Luftabsaugvorrichtung kann als Technikbaustein in Dunstabzugshauben eingesetzt werden. Die Hersteller der Dunstabzugshauben können die Luftabsaugvorrichtung als ein einziges lüftungstechnisches Bauteil vom Lieferanten beziehen und sich darauf konzentrieren, die äußeren Bauteile der Dunstabzugshaube an ihre Designvorstellungen anzupassen. Als Modul kann die Luftabsaugvorrichtung aber auch in beliebige Lüftungsleitungen, beispielsweise in Industrie- oder Gewerbeanlagen, eingesetzt werden.

Es wird ausdrücklich darauf hingewiesen, dass die vorstehend beschriebenen vorteilhaften Ausgestaltungen jeweils für sich mit den Merkmalen des Hauptanspruchs, aber auch in beliebiger Kombination untereinander miteinander kombinierbar sind.

Weitere Abwandlungen und bevorzugte Ausgestaltungen der Erfindung ergeben sich aus der nachfolgenden gegenständlichen Beschreibung und den Zeichnungen. Die Erfindung wird nachfolgend anhand eines Ausführungsbeispiels näher beschrieben.

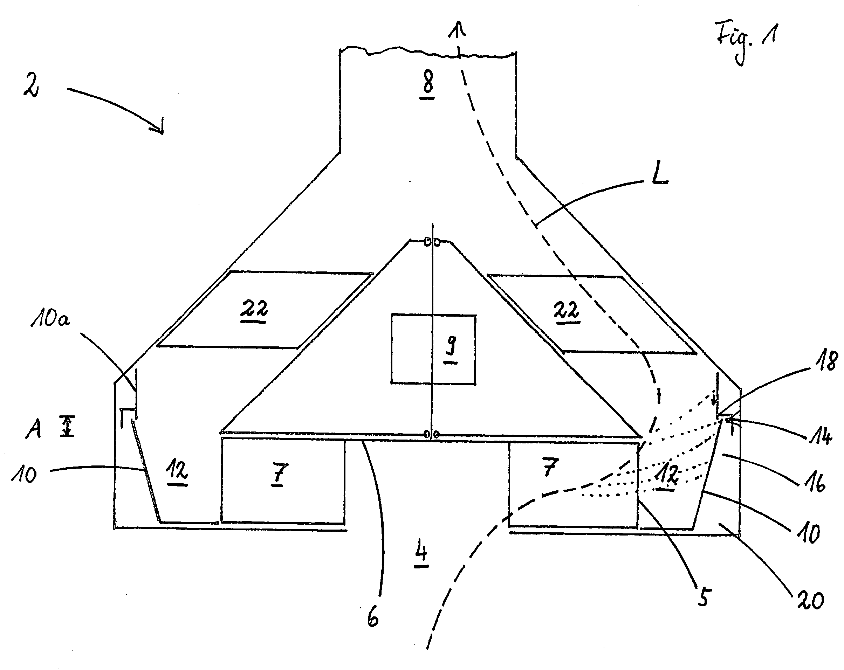

Fig. 1 zeigt einen skizzenartigen Querschnitt durch eine Luftabsaugvorrichtung 2, durch die ein Luftstrom L durch einen in der Luftabsaugvorrichtung 2 ausgebildeten Luftführungskanal hindurchströmt. In einem ersten Abschnitt führt der Luftführungskanal von einer Ansaugöffnung 4 ausgehend durch ein Lüfterrad 6 hindurch, das mit einem Motor 9 antreibbar ist. Das Lüfterrad 6 ist mit einer Anzahl von Luftschaufeln 7 versehen. Durch die Rotationsbewegung des Lüfterrades 6 wird der Luftstrom L im Zwischenraum zwischen den Luftschaufeln 7 in eine radiale Richtung nach außen beschleunigt und erreicht bei seinem Austritt aus dem Lüfterrad 6 seine höchste Geschwindigkeit. Die in Strömungsrichtung gesehen hinteren Kanten von benachbarten Luftschaufeln 7 begrenzen seitlich jeweils eine Ausströmungsöffnung 5, durch die der Luftstrom L aus dem Lüfterrad 6 austritt.

Direkt an die Ausströmungsöffnung 5 schließt sich der Durchströmungsraum 12 als Bestandteil eines zweiten Abschnitts des Luftführungskanals an. Der Durchströmungsraum 12 ist stromaufwärts durch die Ausströmungsöffnungen 5 und in radialer Richtung nach außen hin durch die in einem Abstand zu den Ausströmungsöffnungen 5 angeordnete seitliche Wandung 10 begrenzt. Die seitliche Wandung 10 ist den Ausströmungsöffnungen 5 gegenüberliegend in einem ausreichenden Abstand angeordnet. Die seitliche Wandung 10 befindet sich im Ausführungsbeispiel außerdem in einer horizontalen Ebene zum Lüfterrad 6 in Höhe der Ausströmungsöffnungen 5 des Lüfterrades 6. In die Stromabwärtsrichtung ist der Durchströmungsraum 12 offen, so dass der Luftstrom L frei durch ihn hindurch strömen kann. Im Durchströmungsraum 12 sind keine Luftleitvorrichtungen angeordnet, durch die der Luftstrom L abgebremst oder umgeleitet werden könnte. Dadurch kann der Luftstrom L mit einer höchstmöglichen Geschwindigkeit aus dem Lüfterrad 6 austreten und in den Durchströmungsraum 12 eintreten, in dem der Luftstrom L dann in eine mehr axiale Strömungsrichtung im Verhältnis zur Drehachse des Lüfterrades 6 hin umgeleitet wird. Die Richtungsangaben "radial" und "axial" sind nicht als scharfe, sondern nur ungefähre Richtungsangaben zu verstehen, die genau oder zumindest annähernd eingehalten sein können. Die Umlenkung der Strömungsrichtung des Luftstroms L im Durchströmungsraum 12 wird insbesondere durch den Verlauf des sich an den Durchströmungsraum 12 anschließenden Luftführungskanal beeinflusst. Die Richtungsumlenkung im Durchströmungsraum 12 wird allerdings auch durch die seitliche Wandung 10 mit bewirkt. Dadurch, dass sich diese in Höhe der und in einem Abstand zu den Ausströmungsöffnungen 5 befindet und sich in Querrichtung zum Luftstrom L erstreckt, wird der Luftstrom L im Durchströmungsraum 12 ebenfalls umgelenkt.

In Fig. 1 ist der Luftstrom L durch eine gestrichelte Linie angedeutet. Im Bereich des Durchströmungsraumes 12 ist durch gepunktete Linien angedeutet, auf welche Weise sich die Flugbahn von im Luftstrom bewegten Partikeln im Durchströmungsraum 12 darstellt. Anhand der gepunkteten Linien, die die möglichen Flugbahnen der Partikel andeutet, ist erkennbar, dass die Partikel der scharfen Umlenkung des Luftstroms L im Durchströmungsraum 12 nicht folgen. Die Flugbahnen der Partikel weisen zwar auch einen mehr oder weniger stark gekrümmten, bogenförmigen Verlauf auf, aufgrund des größeren Radius der Flugbahnen der Partikel treffen diese auf die seitliche Wandung 10 auf und haften dort an ihrer Oberfläche an. Auf diese Weise werden die Partikel aus dem Luftstrom L abgeschieden.

In der Querschnittsansicht in Fig. 1 ist erkennbar, dass sich in Strömungsrichtung gesehen am Ende der seitlichen Wandung 10 eine Öffnung 14 befindet, durch die an der seitlichen Wandung 10 entlang gleitende und/oder fließende Stoffe auf die Rückseite 16 der Wandung 10 gelangen können. Durch die Entfernung der entsprechenden Stoffe aus dem Strömungsraum 12 können sich diese nicht erneut mit dem Luftstrom L vermischen und von diesem fort getragen werden. Im in Fig. 1 gezeigten Ausführungsbeispiel befindet sich die Öffnung 14 in axialer Richtung zur Drehachse des Lüfterrades 6 in einem Bereich in Strömungsrichtung des Luftstroms L gesehen versetzt hinter dem Lüfterrad 6, wobei der Abstand zwischen dem Lüfterrad 6 und der Öffnung 14 im gezeigten Ausführungsbeispiel dem Abstandsmaß A entspricht. Die seitliche Wandung 10 ist ebenfalls um das Abstandsmaß A in axialer Richtung bis in den Bereich hinter dem Lüfterrad 6 geführt. Im Ausführungsbeispiel ist zwischen der seitlichen Wandung 10 und der seitlichen Wandung 10a nur eine einzige Öffnung 14 vorgesehen, die ringförmig umlaufen kann, es können jedoch auch mehrere Öffnungen 14 vorgesehen sein.

Im Ausführungsbeispiel ist ein Vorsprung 18 gezeigt, der sich um ein geeignetes Maß über die Oberfläche der benachbarten seitlichen Wandung 10 erhebt. Durch den Vorsprung 18 wird der Luftstrom L von der Öffnung 14 abgelenkt. Tropfen von Partikeln, die die Öffnung 14 erreichen, werden so vom Vorsprung 18 davor bewahrt, vom Luftstrom L mitgerissen zu werden. Die Partikel, die die Öffnung 14 erreichen, können auf diese Weise auf die Rückseite 16 der seitlichen Wandung 10 gelangen und dort in ein Auffangreservoir 20 tropfen.

Soweit sich Partikel im Bereich der seitlichen Wandung 10a abscheiden, können die dort abgeschiedenen Partikel der Schwerkraft folgend bis zum Vorsprung 18 an der seitlichen Wandung 0a ablaufen. Am Vorsprung 18 können die so ablaufenden Partikel dann ebenfalls in den Bereich der Öffnung 14 gelangen und auf diese Weise aus dem Durchströmungsraum 12 abgeschieden werden. Das Ablaufen der Partikel an der seitlichen Wandung 10a entlang ist durch einen kleinen Pfeil angedeutet.

Stromabwärts hinter dem Durchströmungsraum 12 befinden sich im Luftführungskanal Gleichrichter-Strömungsflächen 22, durch die die Luftströmung L vergleichmäßigt wird.

Die in Fig. 1 dargestellte Querschnittsansicht der Luftabsaugvorrichtung kann sich auf eine Vorrichtung mit einer kreisförmigen Grundform beziehen, in diesem Fall ist es vorteilhaft, wenn der Durchströmungsraum 2 ringförmig um das Lüfterrad 6 umlaufend ausgestaltet ist. Von diesem Ausführungsbeispiel abweichend ist es jedoch auch möglich, die erfindungsgemäßen Luftabsaugvorrichtungen rechteckig oder auf sonstige Weise in ihrer Grundform auszugestalten. Bei einer umlaufenden Ringform des Durchströmungsraums 12 ergeben sich wegen der Kreisform des Lüfterrades jedoch besonders gleichmäßige Strömungsverhältnisse im Durchströmungsraum 12, auch verfügen entsprechende Luftabsaugvorrichtungen 2 mit einer kreisförmigen Grundform auch bei unterschiedlichen Drehzahlen des Motors 9 über einen relativ großen Bereich, in dem gleichmäßige Abscheideleistungen erzielt werden.

In dem in Fig. 1 dargestellten Ausführungsbeispiel ist erkennbar, dass die Form der seitlichen Wandung 10 an den Strömungsverlauf des Luftstroms L durch den Durchströmungsraum 12 hindurch angepasst ist. Da der Luftstrom L im Durchströmungsraum 12 einen bogenförmigen Verlauf auf die Ausblasöffnung 8 zu aufweist, kann der Strömungsraum 12 in seinem unteren Bereich schmaler ausgeführt sein als in seinem oberen Bereich. Durch den schrägen Wandverlauf der seitlichen Wandung 10 weist diese in Strömungsrichtung des Luftstroms L gesehen eine Aufweitung auf, der freie vom Luftstrom L durchströmbare Querschnitt des Durchströmungsraums 12 vergrößert sich stromabwärts.

## Patentansprüche

1. Luftabsaugvorrichtung (2) mit einer Ansaugöffnung (4), einem sich daran anschließenden Luftführungskanal für einen Luftstrom (L), der sich in einem ersten Abschnitt durch ein rotierend antreibbares Lüfterrad (6) hindurch in radialer Richtung nach außen und der sich an die Ausströmungsöffnungen (5) des Lüfterrads (6) anschließend in einem zweiten Abschnitt unter Umlenkung des Luftstroms (L) in einer annähernd axialen Richtung zum Lüfterrad (6) erstreckt und in einer Ausblasöffnung (8) mündend ausgestaltet ist,
wobei der zweite Abschnitt eine seitliche Wandung (10) aufweist, die mit einem Abstand den Ausströmungsöffnungen (5) des Lüfterrades (6) gegenüberliegend angeordnet ist,
wobei der zweite Abschnitt einen in der Rotationsebene des Lüfterrades (6) angeordneten Durchströmungsraum (12) aufweist, der sich an die Ausströmungsöffnungen (5) des Lüfterrades (6) anschließt, der in radialer Richtung durch die seitliche Wandung (10) begrenzt ist und in dem keine Luftleitvorrichtungen angeordnet sind,
wobei im Lüfterrad (6) angeordnete Luftschaufeln (7) eine Gestaltung aufweisen, durch die der Luftstrom (L) bei seinem Austritt aus dem Lüfterrad (6) in radialer Richtung aus den Ausströmungsöffnungen (5) austritt und durch den Durchströmungsraum (12) auf die seitliche Wandung (10) gerichtet ist,
wobei die Form der seitlichen Wandung (10) an den Strömungsverlauf des Luftstroms (L) durch den Durchströmungsraum (12) angepasst ist und in Strömungsrichtung des Luftstroms (L) eine Aufweitung aufweist.

2. Luftabsaugvorrichtung (2) nach Anspruch 1, **dadurch gekennzeichnet, dass** sich der Durchströmungsraum (12) unmittelbar an die Ausströmungsöffnungen anschließt.

3. Luftabsaugvorrichtung nach Anspruch 1 oder 2, **dadurch gekennzeichnet, dass** die seitliche Wandung (10) eine oder mehrere Öffnungen (14) aufweist, durch die an der Wandung (10) entlang gleitende und/oder fließende Stoffe auf die Rückseite (16) der Wandung (10) gelangen können.

4. Luftabsaugvorrichtung (2) nach Anspruch 3, **dadurch gekennzeichnet, dass** stromabwärts zu einer Öffnung (14) ein Vorsprung (18) angeordnet ist, durch den an der Wandung (10) entlang gleitende und/oder fließende Stoffe aufgefangen und durch die Öffnung (14) hindurch in den Raum auf der Rückseite (16) der Wandung (10) umgeleitet sind.

5. Luftabsaugvorrichtung (2) nach Anspruch 4, **dadurch gekennzeichnet, dass** der Vorsprung (18) auf der in Strömungsrichtung des Luftstroms durch den Durchströmungsraum (12) stromabwärts gelegenen Seite der Öffnung (14) angeordnet und dem Luftstrom entgegen gerichtet ist.

6. Luftabsaugvorrichtung (2) nach einem der vorhergehenden Ansprüche 3, 4 oder 5, **dadurch gekennzeichnet, dass** auf der Rückseite (16) der Wandung (10) ein Auffangreservoir (20) zum Ansammeln der durch die Öffnung (14) aus dem zweiten Abschnitt abgeschiedenen gleitenden und/oder fließenden Stoffe angeordnet ist.

7. Luftabsaugvorrichtung (2) nach einem der vorhergehenden Ansprüche 3 bis 6, **dadurch gekennzeichnet, dass** die Öffnung (14) als umlaufender Spalt ausgestaltet ist.

8. Luftabsaugvorrichtung (2) nach einem der vorhergehenden Ansprüche, **dadurch gekennzeichnet, dass** die seitliche Wandung (10) ganz oder zumindest bereichsweise mit einer Kühlvorrichtung kühlbar und/oder mit einer Heizvorrichtung heizbar ist.

9. Luftabsaugvorrichtung (2) nach einem der vorhergehenden Ansprüche, **dadurch gekennzeichnet, dass** im Luftführungskanal stromabwärts zum Durchströmungsraum (12) Gleichrichter-Strömungsflächen (22) angeordnet sind.

10. Luftabsaugvorrichtung (2) nach einem der vorhergehenden Ansprüche, **dadurch gekennzeichnet, dass** der Durchströmungsraum (12) ringförmig um das Lüfterrad (6) umlaufend ausgestaltet ist.

11. Luftabsaugvorrichtung (2) nach einem der vorhergehenden Ansprüche, **dadurch gekennzeichnet, dass** das Lüfterrad (6) und/oder die seitliche Wandung (10) über eine werkzeuglos lösbare Verbindung mit der Luftabsaugvorrichtung (2) verbunden sind.

12. Luftabsaugvorrichtung (2) nach einem der vorhergehenden Ansprüche, **dadurch gekennzeichnet, dass** sich die seitliche Wandung (10) in axialer Richtung zur Drehachse des Lüfterrades (6) bis in einen Bereich hinter dem Lüfterrad (6) erstreckt und in diesem Bereich mindestens eine Öffnung (14) in der seitlichen Wandung (10) vorhanden ist.

13. Luftabsaugvorrichtung (2) nach einem der vorhergehenden Ansprüche, **dadurch gekennzeichnet, dass** die Luftabsaugvorrichtung (2) als Rohrlüftermodul in eine vorhandene Lüftungsvorrichtung einsetzbar ist.

14. Verfahren zur Abscheidung von in einem Luftstrom (L) bewegten Partikeln, bei dem der Luftstrom (L) in radialer Richtung durch ein Lüfterrad (6) befördert und beschleunigt wird, aus Ausströmungsöffnungen (5) aus dem Lüfterrad (6) austritt und danach in eine axiale Richtung umgelenkt wird, während die Partikel auf die seitliche Wandung (10) auftreffen und so aus dem Luftstrom (L) abgeschieden werden,
wobei die Umlenkung in eine axiale Richtung in einem Durchströmungsraum (12) erfolgt, der sich unmittelbar an die Ausströmungsöffnungen (5) anschließt, der in radialer Richtung durch
eine seitliche Wandung (10) begrenzt ist und in dem keine Luftleitvorrichtungen angeordnet sind,
wobei die im Lüfterrad (6) angeordneten Luftschaufeln (7) eine Gestaltung aufweisen, durch die der Luftstrom (L) bei seinem Austritt aus dem Lüfterrad (6) in radialer Richtung aus den Ausströmungsöffnungen (5) austritt und durch den Durchströmungsraum (12) auf die seitliche Wandung (10) gerichtet ist,
wobei die Form der seitlichen Wandung (10) an den Strömungsverlauf des Luftstroms (L) durch den Durchströmungsraum (12) angepasst ist und in Strömungsrichtung des Luftstroms (L) eine Aufweitung aufweist.

15. Verfahren nach Anspruch 14, **dadurch gekennzeichnet, dass** das Verfahren in einer Luftabsaugvorrichtung (2) nach einem der Ansprüche 1 bis 13 ausgeführt wird.

## Claims

1. An air extraction device (2) with an intake opening (4), an air guiding passage for an air flow (L) adjoining the intake opening and extending with a first section through a rotatingly drivable fan wheel (6) in radial direction outwardly and with a second section, adjoining the outflow opening (5) of the fan wheel (6) with deflection of the air flow (L) in an approximately axial direction relative to the fan wheel (6) and is configured so as to end in a blow-out opening (8),
wherein the second section has a lateral wall (10) positioned at a spacing opposite to the outflow opening (5) of the fan wheel (6), wherein the second section comprises a flow-through space (12) arranged in the rotational plane of the fan wheel (6), that adjoins the outflow openings (5) of the fan wheel (6), that is delimited in radial direction by the lateral wall (10) and in which no air guiding devices are arranged,
wherein vanes (7) arranged in the fan wheel (6) have a design by means of which the air flow (L), upon exiting from the fan wheel (6), exits in radial direction from the outflow openings (5) and is directed through the flow-through space (12) onto the lateral wall (10),
wherein the shape of the lateral wall (10) is matched to the flow course of the air flow (L) through the flow-through space (12) and widens in the flow direction of the air flow (L).

2. The air extraction device (2) according to claim 1, **characterized in that** the flow-through space (12) adjoins immediately the outflow openings.

3. The air extraction device according to claim 1 or 2, **characterized in that** the lateral wall (10) has one or several openings (14) through which substances that are gliding and/or flowing along the wall (10) can reach the back (16) of the wall (10).

4. The air extraction device (2) according to claim 3, **characterized in that** downstream of an opening (14) a projection (18) is arranged by means of which substances that are gliding and/or flowing along the wall (10) can be collected and can be deflected through the opening (14) into the space at the back (16) of the wall (10).

5. The air extraction device (2) according to claim 4, **characterized in that** the projection (18) is arranged on the side of the opening (14) that is positioned downstream in the flow direction of the air flow through the flow-through space (12) and that is oriented opposite to the air flow.

6. The air extraction device (2) according to one of the preceding claims 3, 4 or 5, **characterized in that** on the back (16) of the wall (10) a catch basin (20) is arranged for collecting the gliding and/or flowing substances that are separated by the opening (14) from the second section.

7. The air extraction device (2) according to one of the preceding claims 3 to 6, **characterized in that** the opening (14) is designed as a circumferentially extending slot.

8. The air extraction device (2) according to one of the preceding claims, **characterized in that** the lateral wall (10) is entirely or at least over portions thereof coolable by a cooling device and/or heatable by a heating device.

9. The air extraction device (2) according to one of the preceding claims, **characterized in that** in the air guiding passage downstream of the flow-through space (12) rectifying flow surfaces (22) are arranged.

10. The air extraction device (2) according to one of the preceding claims, **characterized in that** the flow-through space (12) is designed to extend annularly in circumferential direction about the fan wheel (6).

11. The air extraction device (2) according to one of the preceding claims, **characterized in that** the fan wheel (6) and/or the lateral wall (10) is connected with the air extraction device (2) by a connection that can be released without requiring a tool.

12. The air extraction device (2) according to one of the preceding claims, **characterized in that** the lateral wall (10) in axial direction to the rotational axis of the fan wheel (6) extends into an area behind the fan wheel (6) and at least one opening (14) is present in the lateral wall (10) in this area.

13. The air extraction device (2) according to one of the preceding claims, **characterized in that** the air extraction device (2) is insertable as a pipe venting module into an existing venting device.

14. A method for separating particles moved within an air flow (L), in which the air flow (L) is conveyed and accelerated in radial direction by a fan wheel (6), exits from outflow openings (5) from the fan wheel (6) and subsequently is deflected in an axial direction, while the particles impinge on the lateral wall (10) and are thereby separated from the air flow (L), wherein the deflection takes place in an axial direction in a flow-through space (12) that adjoins immediately the outflow openings (5), that is delimited by a lateral wall (10) in radial direction and in which no air guiding devices are arranged,
wherein the vanes (7) arranged in the fan wheel (6) have a design by means of which the air flow (L), upon exiting from the fan wheel (6), exits in radial direction from the outflow openings (5) and is directed through the flow-through space (12) onto the lateral wall (10),
wherein the shape of the lateral wall (10) is matched to the flow course of the air flow (L) through the flow-through space (12) and widens in the flow direction of the air flow (L).

15. The method according to claim 14, **characterized in that** the method is carried out in an air extraction device (2) according to one of claims 1 to 13.

## Revendications

1. Dispositif d'aspiration d'air (2) comportant un orifice d'entrée d'aspiration (4), un conduit de guidage d'air, destiné à un flux d'air (L), qui se raccorde à l'orifice d'entrée d'aspiration et qui s'étend dans une première partie dans une direction radiale vers l'extérieur à travers une roue de ventilateur (6) pouvant être entraînée en rotation, qui s'étend, en se raccordant à des orifices de sortie d'écoulement (5) de la roue de ventilateur (6), dans une seconde partie par déviation du flux d'air (L) dans une direction à peu près axiale à la roue de ventilateur (6) et qui est conformé de façon à déboucher dans un orifice de sortie de soufflage (8),
la seconde partie comportant une paroi latérale (10) qui est disposée en face des orifices de sortie d'écoulement (5) de la roue de ventilateur (6) à distance à ceux-ci,
la seconde partie comportant une chambre de traversée d'écoulement (12) qui est disposée dans le plan de rotation de la roue de ventilateur (6), qui se raccorde aux orifices de sortie d'écoulement (5) de la roue de ventilateur (6), qui est délimitée dans la direction radiale par la paroi latérale (10) et dans laquelle n'est disposé aucun dispositif de guidage d'air,
des aubes (7) disposées dans la roue de ventilateur (6) ayant une conformation qui permet au flux d'air (L), lors de sa sortie de la roue de ventilateur (6), de sortir des orifices de sortie d'écoulement (5) dans la direction radiale et d'être orienté par le biais de la chambre de traversée d'écoulement (12) vers la paroi latérale (10),
la forme de la paroi latérale (10) étant adaptée à l'allure d'écoulement du flux d'air (L) à travers la chambre de traversée d'écoulement (12) et présentant un élargissement dans la direction d'écoulement du flux d'air (L).

2. Dispositif d'aspiration d'air (2) selon la revendication 1, **caractérisé en ce que** la chambre de traversée d'écoulement (12) se raccorde directement aux orifices de sortie d'écoulement.

3. Dispositif d'aspiration d'air selon la revendication 1 ou 2, **caractérisé en ce que** la paroi latérale (10) comporte un ou plusieurs orifices (14) qui permet à des matières s'écoulant et/ou glissant le long de la paroi (10) de parvenir au côté arrière (16) de la paroi (10).

4. Dispositif d'aspiration d'air (2) selon la revendication 3, **caractérisé en ce qu'**une saillie (18) est disposée en aval d'un orifice (14), laquelle permet de capturer des matières s'écoulant et/ou glissant le long de la paroi (10) et de les dévier en les faisant passer à travers l'orifice (14) jusque dans la chambre située du côté arrière (16) de la paroi (10).

5. Dispositif d'aspiration d'air (2) selon la revendication 4, **caractérisé en ce que** la saillie (18) est disposée du côté de l'orifice (14) qui est situé en aval par référence à la direction d'écoulement du flux d'air à travers la chambre de traversée d'écoulement (12) et est dirigé à l'opposé du flux d'air.

6. Dispositif d'aspiration d'air (2) selon l'une des revendications précédentes 3, 4 ou 5, **caractérisé en ce qu'**un réservoir de capture (20) est disposé du côté arrière (16) de la paroi (10), dans lequel s'accumulent les matières qui s'écoulent et/ou glissent et qui se sont déposées depuis la seconde partie par l'orifice (14).

7. Dispositif d'aspiration d'air (2) selon l'une des revendications précédentes 3 à 6, **caractérisé en ce que** l'orifice (14) est réalisé sous la forme d'une fente périphérique.

8. Dispositif d'aspiration d'air (2) selon l'une des revendications précédentes, **caractérisé en ce que** la paroi latérale (10) peut être entièrement ou au moins partiellement refroidie par un dispositif de refroidissement et/ou chauffée par un dispositif de chauffage.

9. Dispositif d'aspiration d'air (2) selon l'une des revendications précédentes, **caractérisé en ce que** des surfaces d'écoulement de redresseur (22) sont disposés dans le conduit de guidage d'air en aval de la chambre de traversée d'écoulement (12).

10. Dispositif d'aspiration d'air (2) selon l'une des revendications précédentes, **caractérisé en ce que** la chambre de traversée d'écoulement (12) est conformée de façon annulaire autour de la roue de ventilateur (6).

11. Dispositif d'aspiration d'air (2) selon l'une des revendications précédentes, **caractérisé en ce que** la roue de ventilateur (6) et/ou la paroi latérale (10) sont reliées au dispositif d'aspiration d'air (2) par liaison amovible sans outil.

12. Dispositif d'aspiration d'air (2) selon l'une des revendications précédentes, **caractérisé en ce que** la paroi latérale (10) s'étend dans une région située en arrière de la roue de ventilateur (6) par référence à la direction axiale par rapport à l'axe de rotation de la roue de ventilateur (6) et, dans cette région, au moins un orifice (14) est ménagé dans la paroi latérale (10).

13. Dispositif d'aspiration d'air (2) selon l'une des revendications précédentes, **caractérisé en ce que** le dispositif d'aspiration d'air (2) peut être inséré, en tant que module de ventilateur tubulaire, dans un dispositif de ventilation.

14. Procédé de dépôt de particules en mouvement dans un flux d'air (L), dans lequel le flux d'air (L) est transporté et est accéléré dans la direction radiale par une roue de ventilateur (6), sort de la roue de ventilateur (6) par des orifices de sortie d'écoulement (5) puis est dévié dans une direction axiale, tandis que les particules viennent frapper la paroi latérale (10) et précipitent ainsi du flux d'air (L),
la déviation se faisant dans une direction axiale dans une chambre de traversée d'écoulement (12) qui se raccorde directement aux orifices de sortie d'écoulement (5), qui est délimitée dans la direction radiale par une paroi latérale (10) et dans laquelle n'est disposé aucun dispositif de guidage d'air,
les aubes (7) disposées dans la roue de ventilateur (6) ayant une conformation qui permet au flux d'air (L), lors de sa sortie de la roue de ventilateur (6), de sortir des orifices de sortie d'écoulement (5) dans la direction radiale et d'être orienté par le biais de la chambre de traversée d'écoulement (12) vers la paroi latérale (10),
la forme de la paroi latérale (10) étant adaptée à l'allure d'écoulement du flux d'air (L) à travers la chambre de traversée d'écoulement (12) et présentant un élargissement dans la direction d'écoulement du flux d'air (L).

15. Procédé selon la revendication 14, **caractérisé en ce que** le procédé est mis en oeuvre dans un dispositif d'aspiration d'air (2) selon l'une des revendications 1 à 13.
